# EUROPEAN PATENT SPECIFICATION

(11) **EP 3 653 169 B1**
(45) Date of publication and mention of the grant of the patent: **02.08.2023**
(21) Application number: 18206461.8
(22) Date of filing: 15.11.2018
(51) Int. Cl.: A61C 13/00, A61C 13/08

(54) **METHOD FOR PRODUCING CERAMIC DENTAL PROSTHESIS PARTS, CAD/CAM MACHINING STATION, AND BLANK MADE OF FINAL-STRENGTH DENTAL CERAMIC**
VERFAHREN ZUR HERSTELLUNG VON KERAMISCHEN ZAHNPROTHESENTEILEN, CAD/CAM-BEARBEITUNGSSTATION, UND AUS ENDFESTER ZAHNKERAMIK HERGESTELLTER ROHLING
PROCÉDÉ DE PRODUCTION DE PIÈCES DE PROTHÈSE DENTAIRE EN CÉRAMIQUE, STATION D'USINAGE CAD/CAM, ET ÉBAUCHE EN CÉRAMIQUE DENTAIRE À RÉSISTANCE FINALE

(43) Date of publication of application: 20.05.2020
(73) Proprietor: SIRONA Dental Systems GmbH, 64625 Bensheim (DE); DENTSPLY SIRONA Inc., York, PA 17401 (US)
(72) Inventor: SCHNEIDER, Dr.-Ing. Hans-Christian, 64683 Einhausen (DE); SEIBERT, Dipl.-Ing. Helmut, 64665 Alsbach-Hähnlein (DE); HASENZAHL, Dipl.-Ing. Thomas, 64297 Darmstadt (DE); MORGENROTH, Dipl.-Ing. Mathias, 64285 Darmstadt (DE)
(74) Representative: Özer, Alpdeniz

(56) References cited:
- EP-A1- 3 287 096
- EP-A2- 3 095 412
- WO-A1-01/97707
- WO-A1-2010/094922
- US-A1- 2017 056 137

## Description

The invention relates to a method for producing ceramic dental prosthesis parts by way of a CAD/CAM machining station, to a corresponding CAD/CAM machining station, and to a disk-shaped blank made of a final-strength dental ceramic.

A method for producing dental restorations is known from WO2004/086999A1, in which disk-shaped blanks are processed, which are present in an unsintered form or in a form in which they have not yet undergone final sintering. According to this previously known method, it is not possible to process final-strength blanks.

In contrast, it is the object of the invention to create an improved method for producing ceramic dental prosthesis parts and a corresponding CAD/CAM machining station, a computer program and a blank.

WO01/97707A1 discloses a device for producing dental blanks. EP3095412A2 and US2017056137 A1 disclose dental blanks for manufacturing a dental element.

The object underlying the invention is achieved by the features of the independent claims 1, 4 and 8. Embodiments of the invention are defined in the dependent claims.

A "dental prosthesis part" here shall be understood to mean a ceramic dental prosthesis, such as a crown or a bridge, for the restorative dental medicine field.

A "disk-shaped ceramic blank" here shall, in particular, be understood to mean a so-called round blank, which, for example, can have a cylindrical, and in particular a circular cylindrical, a puck-shaped or a rectangular contour or a contour resembling the human jaw (see https://www.amanngirrbach.com/index.php?id=23&news=UWC9bNZ4&no_cache=1& L=2). A "disk-shaped ceramic blank" as understood herein also encompasses a disk-shaped, plate-shaped or slice-shaped ceramic blank that may have a round, rectangular, triangular or other polygonal or curved or ellipsoid circumference and which is configured to be releasably held by a mounting device on its circumference by a press and/or form fit.

In contrast to block-shaped blanks, such as are known from DE 20 2008 018 342 U1 and EP 2 016 922 B1, for example, where they are referred to as "sub-blanks 84", such a disk-shaped ceramic blank according to the invention does not require a holder attached to the blank (shown as "supports 86" in EP 2 016 922 B1), since the blank is intended to be surrounded on the circumference thereof by the mounting device of a CAD/CAM machining station.

Compared to a block-shaped blank, the special feature of a disk-shaped blank is that a disk-shaped blank is surrounded on the entire circumference, or on almost the entire circumference, in a mounting device for machining purposes, and more particularly in contrast to block-shaped blanks, which are generally only attached on one side, for example by an adhesively attached block holder, during machining.

The use of a disk-shaped blank is especially advantageous for long-span prostheses, such as for dental bridges, since the disadvantages of block-shaped blanks are avoided, in which the mechanical lever is accordingly high, so that a one-sided attachment by a block holder, for example by way of adhesive, is disadvantageous.

In the case of a "disk-shaped ceramic blank," the ratio of the thickness of the blank to the diameter thereof is considerably different from 1:1, in contrast to block-shaped blanks, and the ratio of the thickness of the blank to the diameter thereof may range between 1:10 and 1:4, for example. The diameter is at least more than 40 mm, preferably more than 90 mm, and preferably less than 200 mm, and in particular between 95 mm and 110 mm. Such blanks are holderless, which is to say they do not have a holder attached to the blank, such as by adhesive bonding, but the blanks are intended to attached along the circumference thereof in a mounting device, preferably in a force-fit and/or form-locked manner. Mounting may take place along the entire circumference, or it may be interrupted by recesses along the circumference.

Round blanks having a standard format with a diameter of 98.5 mm and a thickness of 12, 14, 18 or 25 mm, for example, are commercially available in a variety of ceramic materials. However, a round blank may also have a different diameter, such as 105 mm. A round blank may also have a non-circular shape, such as a contour that is based on the shape of the human maxilla.

According to embodiments of the invention, the blank is attached in a mounting device of a CAD/CAM machining station so that the blank is surrounded on the circumference thereof. "Surrounded on the circumference thereof" herein shall, in particular, be understood to mean that the enclosure takes place along the entire circumference of the blank, or a portion of the circumference of the blank having at least one recess, the at least one recess possibly being implemented in the blank and/or in an adapter and/or in the mounting device.

The blank is detachably surrounded in the mounting device, and the enclosure may take place in a force-fit and/or form-locked manner.

A "CAD/CAM machining station" herein shall, in particular, be understood to mean a program-controlled machine for machining a blank so as to produce a dental prosthesis part.

A "grinding tool" shall, in particular, be understood to mean a tool for the CAD/CAM machining station which, in contrast to a milling cutter, does not include a defined rotating cutting edge, but an undefined blade, which is formed by an abrasive working surface. For example, the working surface may include abrasive particles, such as diamonds having a certain grain size, whereby the undefined blade is formed.

Embodiments of the invention are particularly advantageous since the disk-shaped ceramic blank is surrounded over the circumference thereof in the mounting device, and the resulting mounting is more tolerant with respect to cutting forces; this is advantageous compared to the machining of blocks, which can fall from the holder during machining if the adhesive fails under high forces and torque.

Embodiments of the invention are particularly advantageous since the production of ceramic dental prosthesis parts directly from the final-strength blank is made possible. In contrast to the state of the art, no shrinkage that would otherwise result due to final sintering has to be taken into consideration in the generation of the CAD file, which specifies the dimensions of a dental prosthesis part to be produced, but the CAD file can directly indicate the desired final dimensions of the dental prosthesis part to be produced.

The machining complexity is also reduced in that a work step, after the dental prosthesis parts have been machined from the blank, is eliminated, namely the final sintering that is otherwise required. This is advantageous both for applications in laboratories and in so-called chairside applications.

Another advantage is that the use of machining by grinding, instead of milling, allows dental prosthesis parts to be produced which have improved precision in terms of the geometric dimensions thereof, and particularly low surface roughness.

It may be furthermore of advantage in this regard that, as a result of the elimination of the sintering process after machining, a potential source of errors is eliminated, such as an incorrect shrinkage factor. Moreover, embodiments of the invention are particularly advantageous since this can take place without a tool change, which is to say using only the grinding tool.

According to embodiments of the invention, machining by grinding, instead of milling, of the final-strength ceramic blank is made possible in that an initial contact between the blank and the grinding tool is established in such a way that, due to the rotation of the grinding tool about the longitudinal axis thereof, a movement relative to the blank is carried out on the entire contact surface between the grinding tool and the blank.

In other words, the grinding tool is initially moved to the blank in such a way that a contact surface is formed between the abrasive working surface and the blank, wherein the alignment of the longitudinal axis of the grinding tool about which this tool rotates is selected, relative to the blank, in such a way that every point of the abrasive working surface carries out a relative movement with respect to the blank on the contact surface, whereby material is removed from the blank on the entire contact surface. This advantageously makes it possible to carry out a machining operation of a final-strength ceramic blank using a grinding tool while incurring low wear.

According to embodiments of the invention, the geometry of the contact surface is selected in such a way that the same relative speed is achieved over the entire contact surface. In this way, particularly uniform removal, low tool wear, and high quality and precision of the produced surfaces are made possible.

According to one embodiment of the invention, the mounting device of the CAD/CAM machining station has a recess that is open toward the blank. The recess may be a groove extending in the axial direction, having a cross-section large enough to allow the grinding tool to be introduced into the groove. Designing the groove as small as possible has the advantage that the contact surface between the blank and the mounting device, and the attendant stability of the mount, are substantially not reduced, and the local surface pressure can be kept low.

According to one embodiment of the invention, multiple of the recesses may be distributed along the circumference of the mounting device so as to allow the grinding tool to be fed to the blank in corresponding multiple locations.

According to embodiments of the invention, the grinding tool is introduced into one of the recesses of the mounting device, and more particularly without making contact with the mounting device or the blank. Only after the grinding tool has been introduced in the axial direction as far as corresponds to the thickness of the blank, or the depth of the recess, is the grinding tool moved to the blank in the radial direction for the initial contact so as to start to machine the blank.

According to one embodiment of the invention, the blank is attached in the mounting device by way of an adapter, which can have an annular design, for example. In this embodiment, the at least one recess is not formed in the mounting device, but in the adapter. This has the advantage that a CAD/CAM machining station comprising a conventional mounting device can be used for the method according to the invention.

According to one embodiment, the adapter is made of a material, such as metal or plastic material, which allows the blank to be held sufficiently firmly in the mounting device.

According to one embodiment of the invention, recesses in the adapter can be dispensed with if the adapter is made of one material that is softer than the final-strength ceramic of the blank and that, as a result, can be machined by the grinding tool without wear or with little wear. The adapter can be a plastic ring here, for example. In this embodiment, the blank can be accessed on the casing side by previously lowering the grinding tool into the adapter material on the end face. In the case of a CAD/CAM machining station comprising a tool changer, this casing-side access may also take place with a grinding tool other than the one intended for machining the dental ceramic, such as by way of a plastic milling cutter, for example.

According to one embodiment of the invention, the casing-side access of the grinding tool to the blank is implemented in that the blank has a radial flattened region, which provides a recess sufficient for a tool to engage on the casing side. Such a recess can be created during the production of the blank, for example during pressing of the ceramic, or subsequently by removing material from the casing region of the blank, for example by way of a surface grinding machine.

According to one embodiment of the invention, the blank has at least one recess, which extends across the entire thickness of the blank, so as to allow the grinding tool to be fed for the initial contact. Such a recess can, in turn, be implemented during the production of the blank by means of pressing or in a preprocessing step using machining techniques.

In the above-mentioned embodiments including a recess, the blank is likewise surrounded on the circumference, wherein the enclosure is interrupted in the region of each recess. The sum of these interruptions along the circumference is preferably substantially smaller than the length of the circumference, so that the stress introduced into the blank does not fluctuate excessively despite the interruptions along the circumference. For example, the sum of these interruptions is less than 80%, 60%, 40%, 30% or 20% of the circumference, wherein at least one of the recesses is sufficiently large for introducing the grinding tool without contact.

As an alternative, the at least one recess can also have a diameter that is smaller than that of the grinding tool. In this case, a machining operation is carried out when the grinding tool is introduced into the recess, wherein the rotational axis of the grinding tool extends through the recess, and preferably through the center thereof. In this way it is ensured that, even in this case, a relative movement relative to the blank is carried out on the entire contact surface between the grinding tool and the blank when the initial contact is established between the blank and the grinding tool, since the rotational axis (longitudinal axis) is aligned with the recess.

According to one embodiment of the invention, during the production of the blank, it is
- pressed,
- isostatically pressed,
- hot isostatically pressed, or hipped,
- cast and/or
- preground, premilled, preturned, or presintered.

Hipped (hot isostatically pressed) blanks are particularly advantageous since these are particularly hard and thus supply a quality dental prosthesis.

According to one embodiment of the invention, the blank is made of a final-strength dental ceramic, the blank being in particular feldspathic, feldspar-like, glass ceramic, in particular made of lithium disilicate glass ceramic, crystal ceramic, in particular made of aluminum oxide and/or zirconium oxide.

In a further aspect, the invention relates to a CAD/CAM machining station comprising a control unit that is configured in such a way that, based on the rotation of the grinding tool about the longitudinal axis thereof, a relative movement relative to the blank is carried out on the entire contact surface between the grinding tool and the blank. Following this initial contact, the blank is further machined by the grinding tool, for example, along a precalculated trajectory, so as to produce the desired ceramic dental prosthesis parts.

In a further aspect, the invention relates to a disk-shaped blank made of a final-strength dental ceramic, and in particular a round disk, which includes a recess extending across the entire thickness of the blank, wherein the recess can be a through-hole or the recess is located on an edge of the blank. The grinding tool can then be fed to the blank through this recess.

The invention will be described in more detail hereafter with reference to the drawings. In the drawings:
- FIG. 1: shows a block diagram of a CAD/CAM machining system comprising a CAD/CAM machining station and multiple CAD devices;
- FIG. 2: shows the CAD/CAM machining system according to FIG. 1 after the grinding tool has been introduced;
- FIG. 3: shows the CAD/CAM machining system according to FIGS. 1 and 2 after the initial contact between the blank and the grinding tool;
- FIG. 4a: shows a block diagram of a CAD/CAM machining system comprising edge-side feeding of the grinding tool;
- FIGS. 4b, 4c, 4d: show possible geometries of the mounting device, of an adapter or a casing of the blank;
- FIGS. 5a, 5b: show schematic diagrams of an end-face or lateral-side initial contact;
- FIG. 6: shows a block diagram one embodiment of a CAD/CAM machining system including recesses of the blank on both sides;
- FIG. 7: shows a top view onto one embodiment of a blank including a through-hole or a cavity;
- FIG. 8: shows a top view onto a blank including a recess on the lateral surface or casing side thereof;
- FIG. 9: shows a block diagram of a CAD/CAM machining system including a blank, which has an eccentric through-hole;
- FIG. 10: shows a top view onto a blank having an eccentric through-hole and a marking;
- FIG. 11: shows an example including a conical grinding tool; and
- FIGS. 12 to 17: show embodiments including a spherical grinding tool.

Elements of the following examples that correspond to or are identical to each other are each denoted by the same reference numerals.

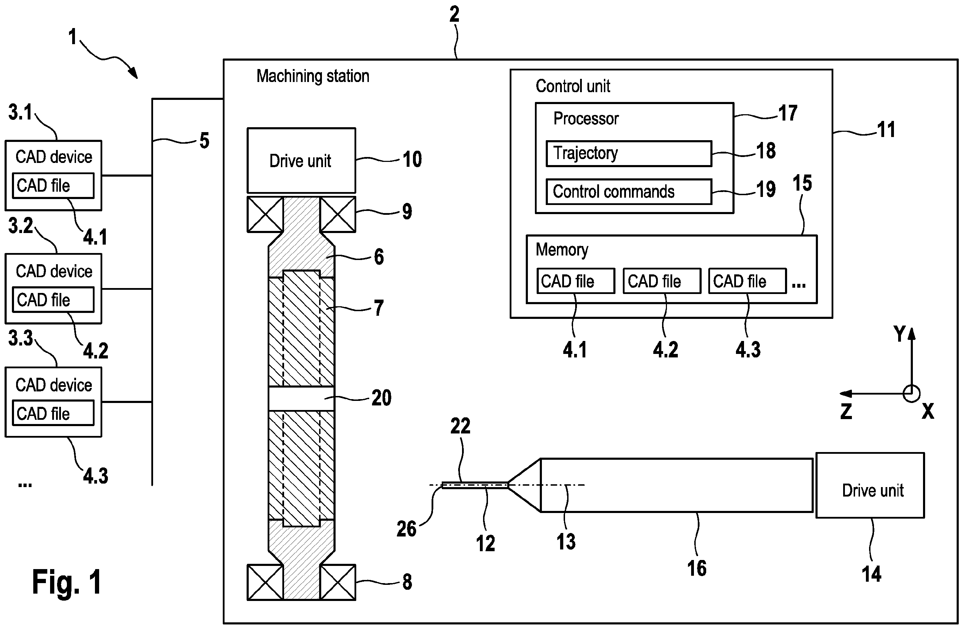

FIG. 1 shows a CAD/CAM machining system 1 comprising a CAD/CAM machining station 2 for producing ceramic dental prosthesis parts. The CAD/CAM machining system 1 comprises at least one CAD device 3.1 for generating a CAD file 4.1, which specifies the final dimensions of one or more of the dental prosthesis parts to be produced.

For example, the CAD device 3.1 includes a scanner for acquiring 3D measurement data from the patient; as an alternative, the 3D measurement data can be received in digital form from the dentist. The CAD device 3.1 is used to execute CAD software so as to generate the CAD file 4.1 for specifying the dental prosthesis part to be produced. Appropriate scanners are commercially available, such as inEosX5 from Dentsply Sirona.

The CAD file 4.1 can be transmitted to the machining station 2 via a communication network 5, such as the Internet. Further CAD devices 3.2, 3.3 etc., which essentially have the same design, can transmit the corresponding CAD files to the machining station 2 via the communication network 5 for the generation of further CAD files 4.2, 4.3 etc., for specifying the final dimensions of further dental prosthesis parts.

The machining station 2 comprises a mounting device 6 for attaching a blank 7 in the machining station 2. For example, the mounting device 6 is designed in such a way that the blank 7 is clamped on the circumference thereof into the mounting device 6. The mounting device 6 is held rotatable about the Y axis by bearings 8, 9. The rotation about the Y axis is effectuated by a drive unit 10 of the mounting device 6, which can be controlled by a control unit 11. In addition to the rotatory alignment of the mounting device 6 about the Y axis, the drive unit 10 can be designed to carry out a positioning within the XY plane, for which purpose the drive unit 10 can be accordingly controlled by the control unit 11.

The machining station 2 furthermore comprises a spindle motor 16 for receiving a grinding tool 12, which has a pin shape in the embodiment described here. The spindle motor 16 is used to rotate the grinding tool 12 about the longitudinal axis 13. In the embodiment described here, the spindle motor 16 can be positioned relative to the mounting device 6 by a further drive unit 14, for which purpose the drive unit 14 can be controlled by the control unit 11. For example, the spindle motor 16 can position the drive unit 14 in all three spatial directions X, Y and Z.

The control unit 11 of the machining station 2 comprises at least one electronic memory 15 for storing the CAD files 4.1, 4.2, 4.3 etc. received from the CAD devices 3.1, 3.2, 3.3 etc.

The control unit 11 furthermore comprises at least one microprocessor 17 for executing a computer program, which includes the program components 18 and 19, for example.

The program component 18 is used to calculate a trajectory from the CAD files 4.1, 4.2, 4.3 etc., along which the grinding tool 12 has to machine the blank 7 to produce the specified dental prosthesis parts.

The program component 19 generates control commands for the drive units 10 and 14, and also for the spindle motor 16, so as to machine the blank 7 in keeping with the trajectory calculated by the program component 18.

In the example described here, the blank 7 has a through-hole 20, which is designed in such a way that the grinding tool 12 can be introduced entirely into the through-hole 20 in the axial direction, which is to say along the Z axis here, without making contact with the blank 7. For example, the through-hole 20 has a circular cylindrical shape having a diameter that is larger than the diameter of the grinding tool 12. Other geometries are also possible.

For example, the through-hole 20 can have a shape that is not large enough to receive the grinding tool 12 such that abrasive grinding action occurs when the grinding tool is introduced into the through-hole.

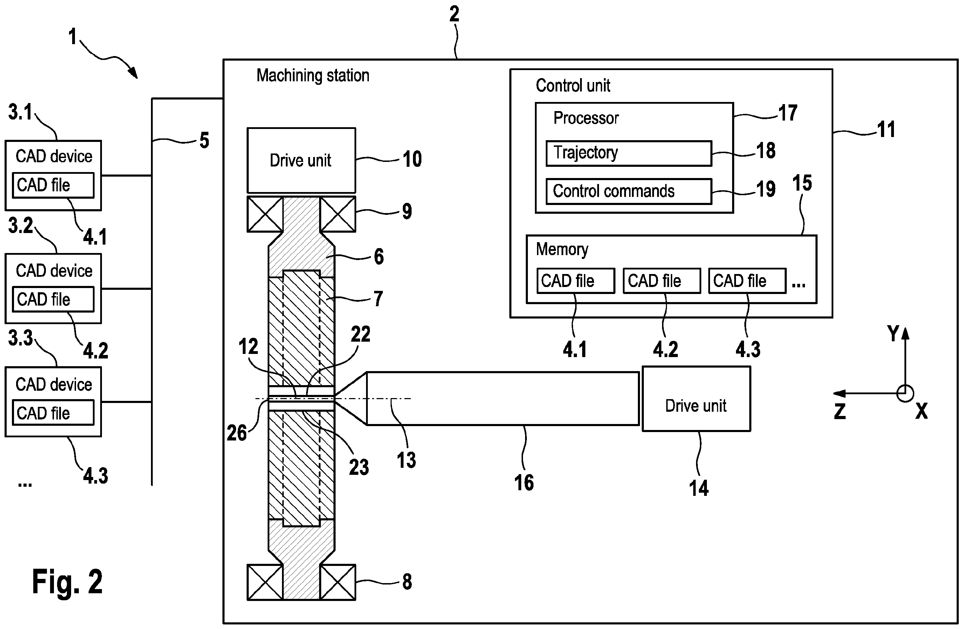

FIG. 2 shows the CAD/CAM machining system 1 after the trajectory and control commands have been calculated by the computer program, and after the grinding tool 12 has been fed to the blank 7, in that the blank 7 and the grinding tool 12 have been displaced relative to one another by the drive units 10 and/or 14 in such a way that the grinding tool 12 has been entirely introduced into the through-hole 12 without making contact therewith. It is irrelevant whether the spindle motor 16 is already switched on to rotate the grinding tool 12 about the longitudinal axis 13.

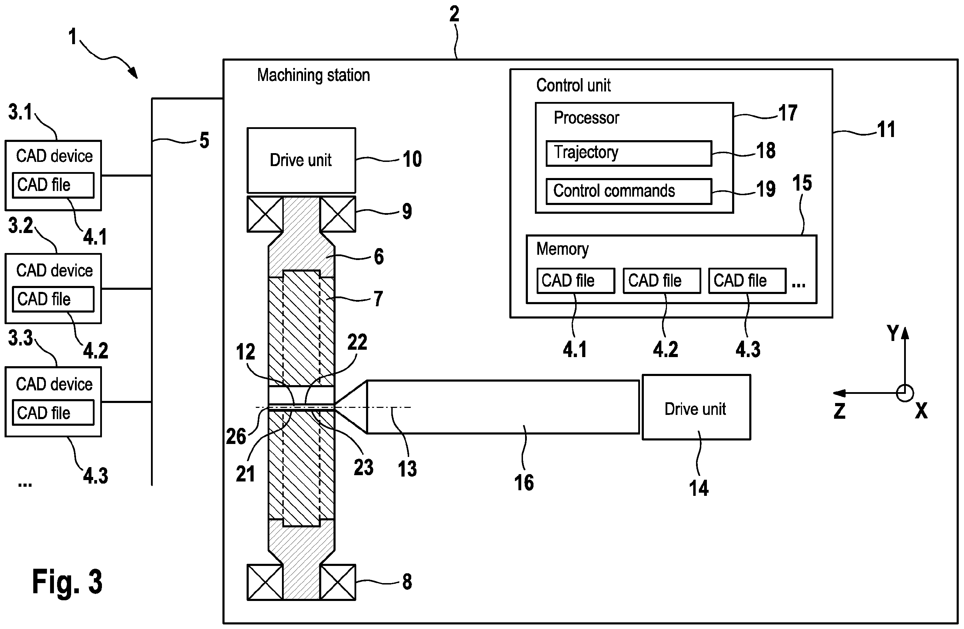

FIG. 3 shows the CAD/CAM machining system 1 after another relative movement has been carried out, starting with the relative position of the blank 7 and the grinding tool 12 shown in FIG. 2, and more particularly by control of the drive units 10 and/or 14 so as to establish initial contact between the blank 7 and the grinding tool 12. For this purpose, the grinding tool 12 is displaced in the y direction perpendicular to the axial edge 23 of the through-hole 20 until the grinding tool makes contact with the through-hole 20 on a contact surface 21. The grinding tool 12 is then rotated about the longitudinal axis 13 thereof by the spindle motor 16. The grinding tool 12 has a lateral surface 22, which includes abrasive elements, such as diamonds having a certain grain size, whereby the material on the contact surface 21 is removed. No load is applied to the end face 26 of the grinding tool 12.

The initial contact between the blank 7 and the grinding tool 12 here thus occurs in that the lateral surface 22 of the grinding tool 12 is displaced perpendicularly, which is to say in the y direction, for example, with respect to an edge 23 of the through-hole 12 extending axially, which is to say in the Z direction, so that the lateral surface 22 makes contact with the edge 23 along the entire thickness extension in the Z direction when this initial contact is established, thereby resulting in the contact surface 21.

The rotation of the lateral surface 22 about the longitudinal axis 13 results in a relative movement of the abrasive elements of the grinding tool 12 along the entire contact surface, whereby material is removed from the blank 7 along the entire contact surface 21 at essentially the same relative speed.

Proceeding from this initial contact, the control unit 11 then controls the drive units 10 and/or 14 by way of the control commands in such a way that the dental prosthesis parts specified in the CAD files 4.1, 4.2, 4.3, etc. are machined from the blank 7. It is particularly advantageous here that this takes place with particularly high precision and, due to machining by grinding, with a particularly high surface quality, and without necessitating a tool change or subsequent sintering. The dental prosthesis parts thus produced can be used directly by a dentist on a patient, without a further processing step.

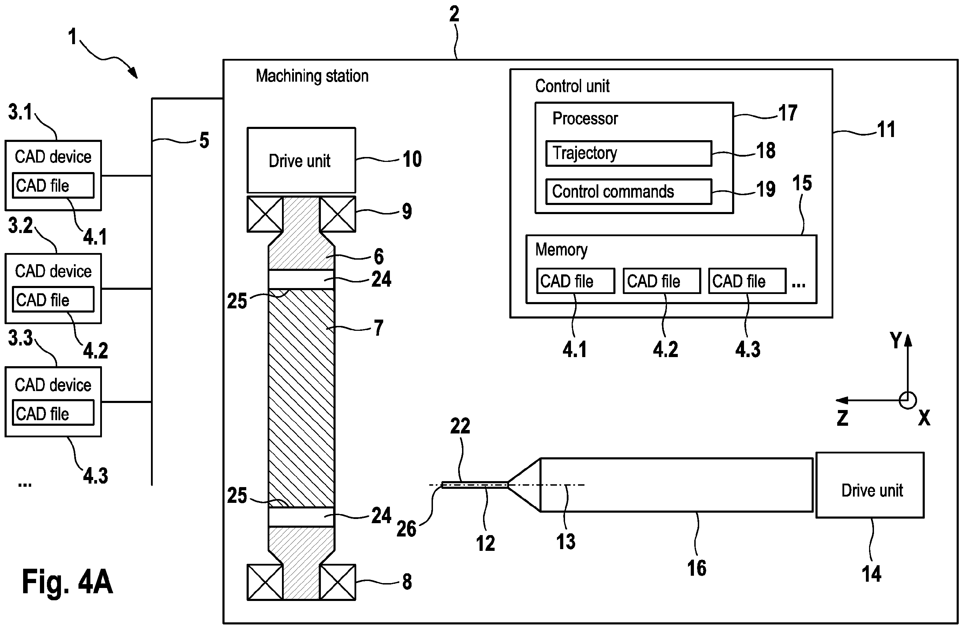

FIG. 4A shows an example of the CAD/CAM machining system 1 in which the mounting device 6 comprises recesses 24. These recesses 24 make the edge 25 of the blank 7 accessible to the grinding tool 12, analogously to FIGS. 1, 2 and 3. Instead of being introduced into a through-hole 20 of the blank 7, which in the embodiment described here does not need to be present, the grinding tool 12 is thus introduced into one of the recesses 24 of the mounting device 6, so as to then be moved with the lateral surface 22 against the edge 25 of the blank 7 to form the contact surface there, analogously to the contact surface 21.

This example has the advantage that standard blanks having no through-hole 20 can be used.

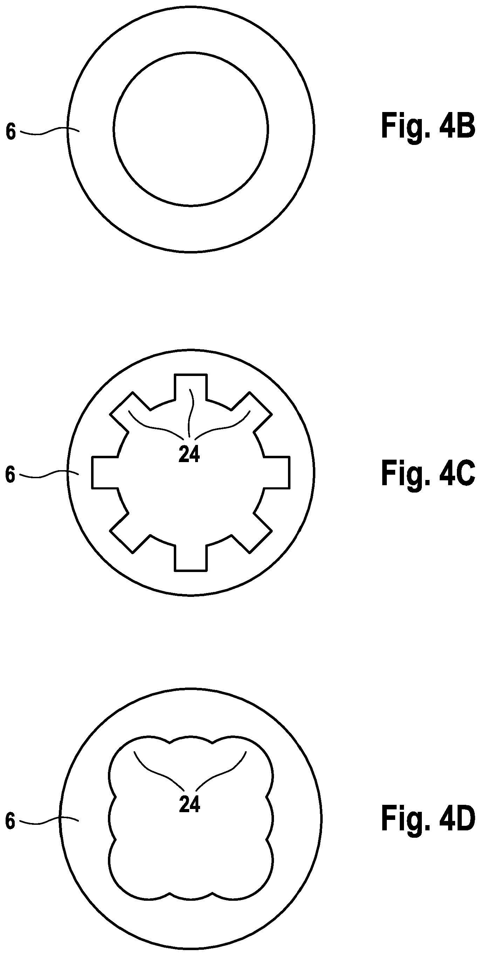

FIG. 4B shows the geometry of an annular mounting device 6 having no recess 24, such as they may be used in the embodiments according to FIGS. 1, 2 and 3, for example.

FIG. 4C shows the geometry of a mounting device 6 including multiple recesses 24, which are uniformly distributed on the circumference of the mounting device and each provide a radial access to the edge 25 of a blank 7 clamped in the mounting device 6.

FIG. 4D shows an alternative mounting device 6 according to FIG 4C, in which the four recesses 24 are not uniformly arranged, but have a curve shape.

Instead of the mounting device 6, the adapter or a casing of the blank 7 can have a geometry according to FIGS. 4A, 4B, 4C or 4D.

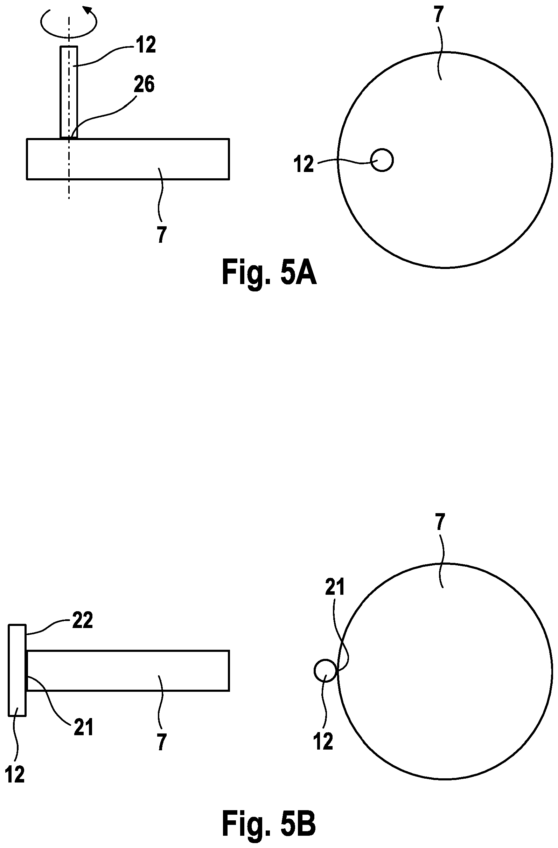

FIGS. 5A and 5B illustrate the advantage of an initial contact between the blank and the lateral surface 22 once again. If the initial contact is not established with the lateral surface 22, but with the end face 26 of the grinding tool 12, as is shown in FIG. 5A, no relative movement takes place at the center of rotation about the longitudinal axis 13 at the contact point between the grinding tool 12 and the blank 7, so that material can hardly be removed from the blank 7 by the grinding tool 12 or only with high wear.

If, in contrast, the initial contact takes place between the blank 7 and the lateral surface 22 of the grinding tool 12, as is the case in the embodiments according to FIGS. 1 to 4, a contact surface 21 is formed, on which the abrasive elements carry out a relative movement with respect to the blank 7, whereby material removal that is gentle on the tool is made possible with a high surface quality and high precision.

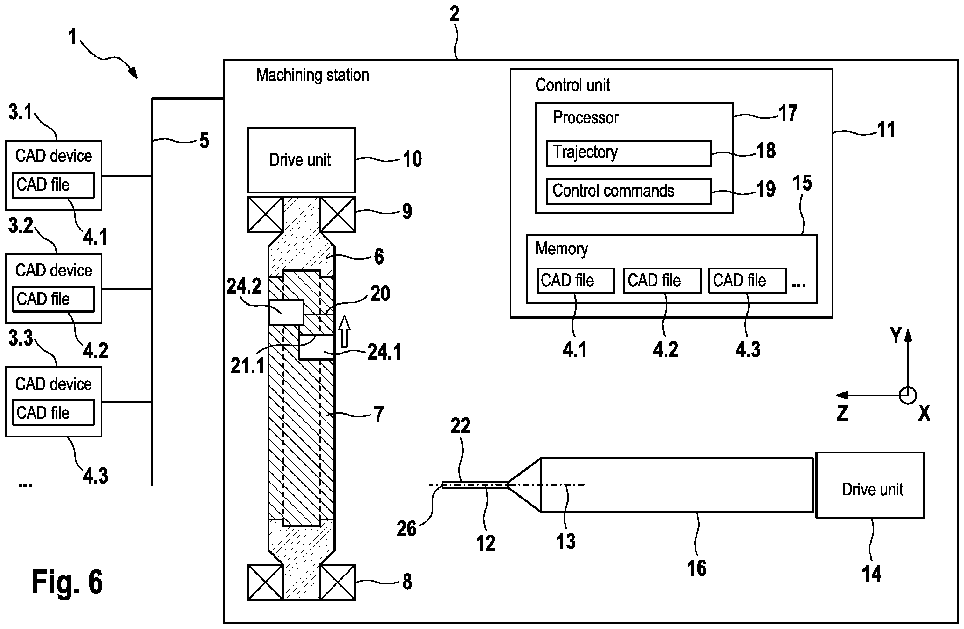

FIG. 6 shows an embodiment of the CAD/CAM machining system 1 for an embodiment of the blank 7 that includes two recesses 24.1 and 24.2.

The recesses 24.1 and 24.2 can each be designed as blind holes. The depths of these blind holes, in sum, amount to at least the thickness of the blank 7.

In this way, machining as follows is made possible:
1. First, the grinding tool 12 is introduced into the recess 24.1 and then forms an initial contact surface 21.1 on an edge of the recess 24.1.
2. By displacing the grinding tool 12 in the direction toward the recess 24.2, which is the Y direction here, the through-hole 20 is created, having the stepped geometry shown in FIG. 6.
3. As soon as the recesses 24.1 and 24.2 have been connected to one another in this manner, the grinding tool 12 can be introduced into the resulting through-hole 20, and further machining can take place analogously to the embodiment according to FIGS. 1, 2, 3.

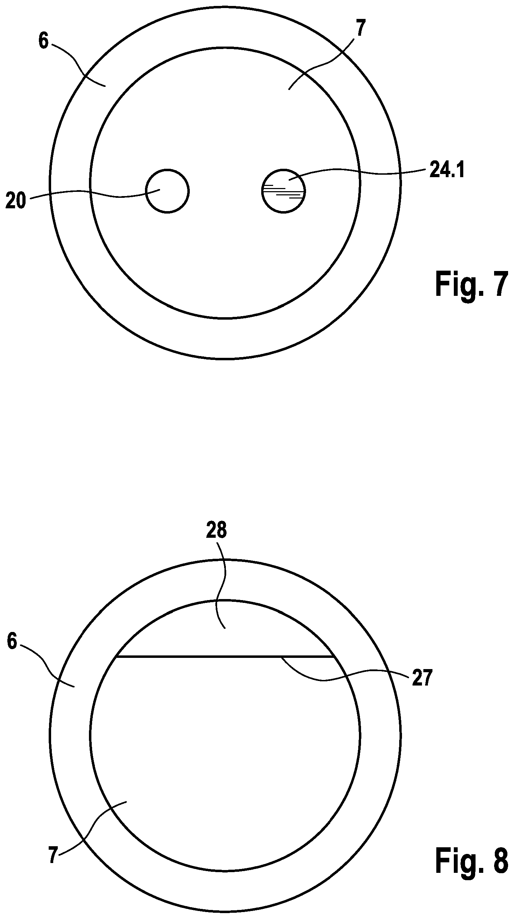

FIG. 7 shows a top view onto a blank 7, which is located in a mounting device 6. The blank 7 can have a through-hole 20, which is formed during the production of the blank 7, for example by being pressed into the blank 7. As an alternative, the blank 7 can also be produced without the through-hole 20. The through-hole 20 is then provided subsequently, after the blank 7 has been produced, by way of milling, and in particular drilling.

As an alternative to the through-hole 20, cavities that are open at the top can be formed on or milled into opposing sides of the blank 7, which is to say recesses 24.1 and 24.2 (see FIG. 6).

FIG. 8 shows a further example of a blank 7 in the mounting device 6, wherein the blank 7 on the edge 27 thereof has a recess 28, which forms a space between the blank 7 and the mounting device 8. In this embodiment, the edge 27 of the blank 7 is accessible in the axial direction via this space, via which the grinding tool 12 can be moved to the blank 7 for the initial contact.

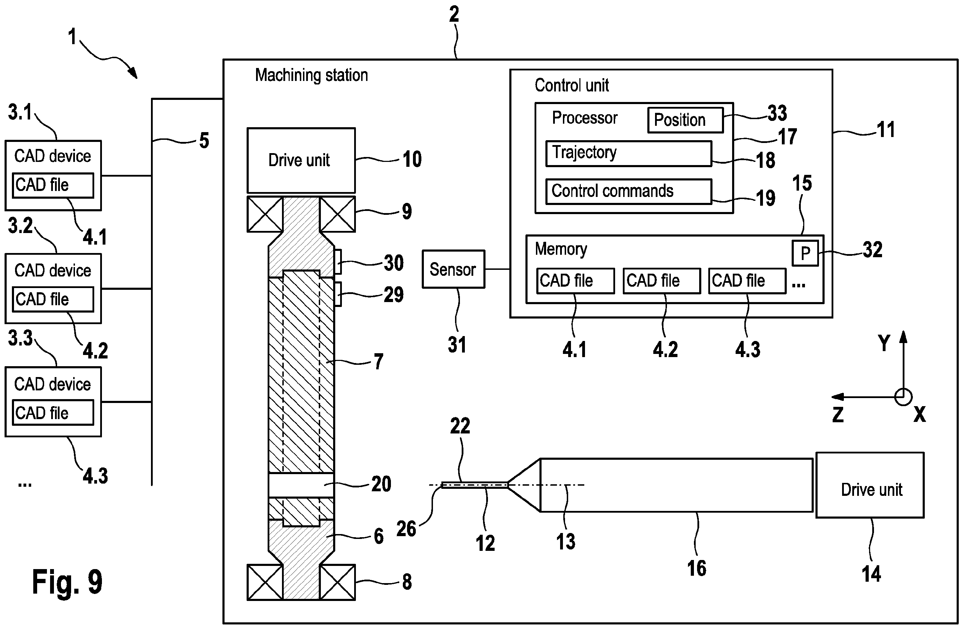

FIG. 9 shows a further example of a CAD-CAM machining system 1 including a blank 7, which has an eccentric through-hole 20. A marking 29 can be provided on or in the blank 7, and a corresponding marking 30 can be provided on or in the mounting device 6, so as to define the position of the through-hole 20 relative to the mounting device 6. When the blank 7 is clamped in the mounting device 6, a user aligns the markings 29 and 30 with one another, so that the through-hole assumes a predetermined position P, which can then be used for the movement by the control unit 11.

As an alternative or in addition, the control unit 11 can automatically detect the position P of the through-hole 20 relative to the mounting device 6. For this purpose, the machining station 2 comprises a sensor 31, such as an optical sensor, which detects the position P of the through-hole 20. Appropriate data 32 indicating this position P is then stored in the memory 15. The position P can be ascertained and the data 32 can be stored in that the microprocessor 17 executes a program component 33. The program components 18 and/or 19 then calculate the trajectory and generate the control commands by taking this position P into consideration, which specifies the starting point of the trajectory. As an alternative or in addition, the sensor can ascertain the position of the marking 29, and thus, indirectly, also the position of the through-hole.

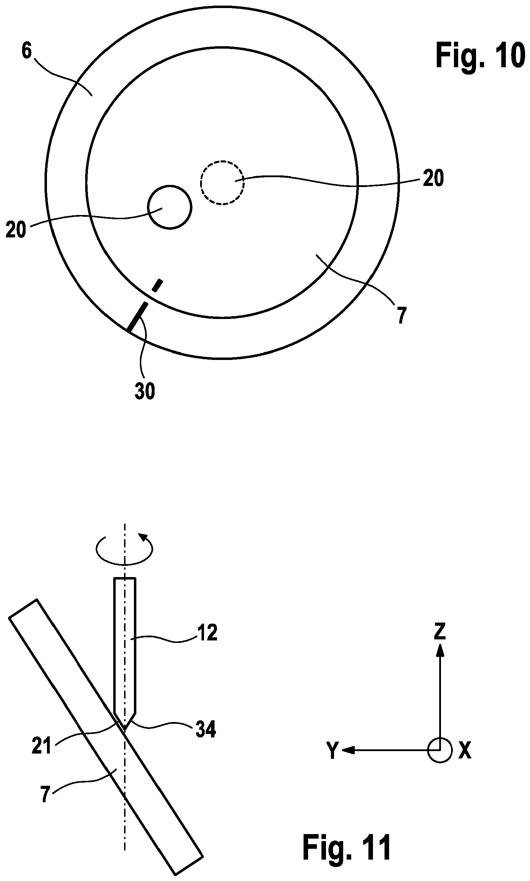

FIG. 10 shows the blank 7 in the example according to FIG. 9 in a top view.

According to a further example, the through-hole 20 can also extend axially through the center of a cylindrical disk-shaped blank 7, so that the markings 29, 30 can then be dispensed with. This is illustrated in FIG. 10 by dotted lines.

According to a further example, the mechanical interface between the edge of the blank 7 and the mounting device 6 can be designed in such a way that the blank 7 can only be clamped in the mounting device 6 in a predefined position. For this purpose, a guide groove for rotational locking, which is to say for preventing turning, can be provided on the mounting device 6, for example.

FIG. 11 shows another example of the invention in which a grinding tool 12 having a cone 34 is used, instead of a cylindrical grinding tool 12. In this example, no recesses, such as a through-hole 20, are necessary, since the desired contact surface, which is also shown in FIG. 11, can be created based on the conical shape.

For this purpose, the blank 7 and the conical surface 34 of the grinding tool 12 are positioned by the control unit 11 relative to one another at an angle setting in such a way that the initial contact with the conical surface 34 is formed on the surface of the blank 7, so that the contact surface 21 results there. The angle setting is made relative to the center of rotation of the grinding tool. By a relative feed of the blank 7 and the grinding tool 12 in the z direction, a through-hole 20 through the blank 7 can thus be created, proceeding from which further machining along the trajectory then takes place. In addition to the feed in the z direction, optionally an feed component may exist in the x and/or y directions, which preferably are each smaller than the feed in the z direction.

According to a further example, a grinding tool having a truncated cone is used instead of a conical grinding tool, wherein the initial contact surface 21 is not formed with the top surface, but the lateral surface of the truncated cone, so that again a relative movement of the abrasive particles takes place on the entire contact surface.

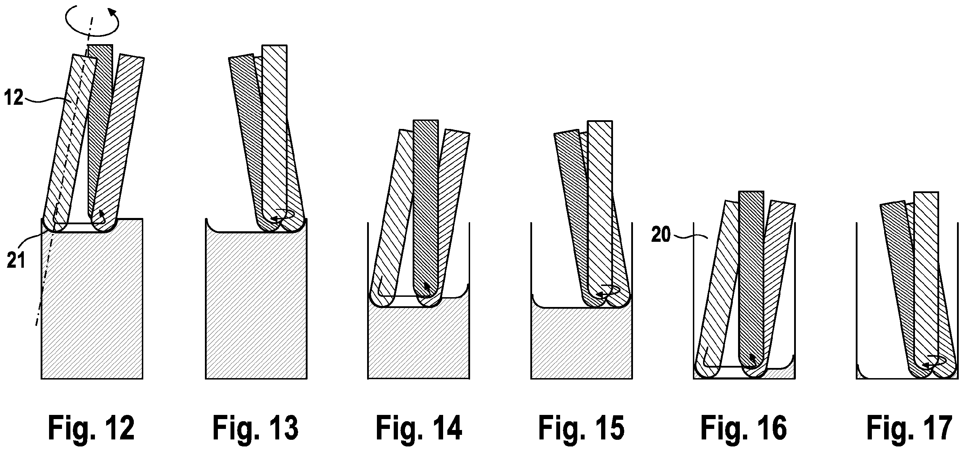

FIGS. 12 to 17 show a further embodiment in which a grinding tool 12 having a spherical working surface is used. FIGS. 12 to 17 show the creation of a through-hole 20 in the blank 7.

The initial contact is established here in that the grinding tool is not placed at a right angle, but at an incline to the surface normal of the blank 7 onto the surface thereof. This ensures that each point of the contact surface 21 carries out a relative movement with respect to the abrasive particles on the spherical working surface of the grinding tool 12. The grinding tool 12 is then moved back and forth in a rocking motion within the contour of the through-hole to be created, wherein the grinding tool 12 is raised when it reaches a position, during this back and forth movement, at which it is situated perpendicularly to the blank, as is shown in FIGS. 12 to 17. By raising the grinding tool 12 in the aforementioned position, it is avoided that a contact surface is briefly formed, at the center of rotation of which no relative movement exists. The formation of such a contact surface is avoided in that the control unit 11 slightly raises the grinding tool 12 during the back and forth movement, by appropriate control of the drive units 10 and/or 14.

### List of reference numerals

- 1: CAD/CAM machining system
- 2: CAD/CAM machining station
- 3.1: CAD device
- 3.2: CAD device
- 3.3: CAD device
- 4.1: CAD file
- 4.2: CAD file
- 4.3: CAD file
- 5: communication network
- 6: mounting device
- 7: blank
- 8: bearing
- 9: bearing
- 10: drive unit
- 11: control unit
- 12: grinding tool
- 13: longitudinal axis
- 14: drive unit
- 15: memory
- 16: spindle motor
- 17: microprocessor
- 18: program component
- 19: program component
- 20: through-hole
- 21: contact surface
- 22: lateral surface
- 23: edge
- 24: recess
- 25: edge
- 26: end face
- 24.1: recess
- 24.2: recess
- 27: edge
- 28: recess
- 29: marking
- 30: marking
- 31: sensor
- 32: data
- 33: program component
- 34: conical surface

## Claims

1. A disk-shaped blank (7) which is made of a final-strength dental ceramic and suitable for use in a method for producing ceramic dental prosthesis parts, **characterized in that**
the disk-shaped blank (7) includes at least one axially extending recess (24.1, 24.2) on each of its opposite sides, wherein the recesses (24.1, 24.2) are not extending through the entire thickness, wherein the depths of the recesses (24.1, 24.2) in sum amounts to at least the thickness of the disk-shaped blank (7), and wherein each recess (24.1.,24.2) is sufficient for a grinding tool (12) of a CAD/CAM machining station (2) to engage in the axial direction (13) for the initial contact.

2. The disk-shaped blank (7) according to claim 1, **characterized by** further comprising a through-hole (20) through the disk-shaped blank (7).

3. The disk-shaped blank (7) according to claim 1 or 2, comprising a marking (29) for the rotatory positioning of the disk-shaped blank (7).

4. A method of producing ceramic dental prosthesis parts by means of a CAD/CAM machining station (2), comprising the following steps:
- providing a disk-shaped blank (7) as defined in any of the proceeding claims;
- attaching the disk-shaped blank (7) in a mounting device (6) of the CAD/CAM machining station so that the disk-shaped blank (7) is surrounded on the circumference thereof;
- controlling the CAD/CAM machining station (2) for establishing an initial contact between the disk-shaped blank (7) and the grinding tool (12) in such a way that the grinding tool (12) is being introduced into one of the recesses (24.1,24.2) for feeding the grinding tool (12) to the disk-shaped blank (7) and is being moved to the disk-shaped blank (7) through the opening of the recess (24.1,24.2) for the initial contact, wherein due to the rotation of the grinding tool (12) about the longitudinal axis (13) thereof, the entire contact surface (21.1) between the grinding tool and the disk-shaped blank (7) has relative movement; and
- machining the disk-shaped blank (7) by means of the rotating grinding tool (12), proceeding from the initial contact, to produce the ceramic dental prosthesis parts.

5. The method according to claim 4, wherein
the mounting device (6) includes at least one recess (24), which is open toward the disk-shaped blank (7), and in the controlling step the grinding tool (12) being introduced into the recess (24) for feeding the grinding tool (12) to the blank and being moved to the disk-shaped blank (7) through the opening of the recess (24) for the initial contact, and/or
the disk-shaped blank (7) is attached in the mounting device (6) by way of an adapter as a casing, which includes at least one recess that is open toward the disk-shaped blank (7), and in the controlling step the grinding tool (12) being introduced into the said recess for feeding the grinding tool (12) to the disk-shaped blank (7) and being moved to the disk-shaped blank (7) through the opening of the recess for the initial contact, and/or
the disk-shaped blank (7) is attached in the mounting device (6) by way of an adapter as a casing, which is made of a material that is softer than the ceramic disk-shaped blank (7), and in particular made of wood or a plastic material, and in the controlling step the grinding tool (12) being introduced into the adapter, and the grinding tool (12) being moved through the adapter to the disk-shaped blank (7) for the initial contact with the disk-shaped blank (7).

6. The method according to claim 4 or 5, wherein the disk-shaped blank (7) includes at least one recess (20; 28) which extends across the entire thickness of the disk-shaped blank (7), wherein in the controlling step the grinding tool (12) being introduced into the recess (20; 28) for feeding the grinding tool (12) to the disk-shaped blank (7) and then being moved to the disk-shaped blank (7) for the initial contact.

7. The method according to claim 5 or 6, wherein in the providing step the recess (20; 28; 24.1, 24.2) is formed into the disk-shaped blank (7) by pressing during manufacture of the disk-shaped blank (7) and/or wherein the recess (20; 28; 24.1, 24.2) is machined by a cutting technique during a preprocessing step of the disk-shaped blank (7).

8. A CAD/CAM machining station (2) comprising: a mounting device (6) for mounting a disk-shaped blank (7), a grinding tool (12); and a control unit (11) which is configured to carry out the method of producing ceramic dental prosthesis parts as defined in any one of claims 4 to 7.

9. The CAD/CAM machining station according to claim 8, where dependent on claim 5 wherein the mounting device includes at least one recess (24), which is open toward the disk-shaped blank, the control unit being configured in such a way that the grinding tool is introduced into the recess (24) for the initial feeding and moved to the blank through the opening of the recess for the initial contact.

10. The CAD/CAM machining station (2) according to claim 8 or 9, comprising a memory (15) in which a position of a recess (20; 24; 28; 24.1, 24.2) is stored, the control unit (11) being configured in such a way that the grinding tool (12) enters the disk-shaped blank (7) at the position of the recess (20; 24; 28; 24.1, 24.2).

11. The CAD/CAM machining station (2) according to any one of claims 8 to 10, comprising an optical sensor (31) for sensing the position of the disk-shaped blank (7) and/or a recess (20; 24; 28; 24.1,24.2) relative to the mounting device (6), the control unit (11) being configured in such a way that the grinding tool (12) enters the disk-shaped blank (7) at the position of the recess (20; 24; 28; 24.1, 24.2).

12. The CAD/CAM machining station (2) according to any one of claims 8 to 11, where dependent on claim 5, comprising an adapter as the casing for attaching the disk-shaped blank (7) in the mounting device (6), the adapter being made of a material that is softer than the ceramic disk-shaped blank (7), and in particular made of wood or plastic material, the control unit (11) being configured in such a way that the grinding tool (12) enters into the adapter for establishing the contact between the disk-shaped blank (7) and the grinding tool (12).

## Patentansprüche

1. Scheibenförmiger Rohling (7), der aus einer endfesten Zahnkeramik hergestellt ist und zur Verwendung in einem Verfahren zur Herstellung von keramischen Zahnprothesenteilen geeignet ist, **dadurch gekennzeichnet, dass**
der scheibenförmige Rohling (7) auf jeder seiner gegenüberliegenden Seiten mindestens eine axial verlaufende Aussparung (24.1, 24.2) aufweist, wobei sich die Aussparungen (24.1, 24.2) nicht über die gesamte Dicke erstrecken, wobei die Tiefen der Aussparungen (24.1, 24.2) in Summe mindestens die Dicke des scheibenförmigen Rohlings (7) betragen und wobei jede Aussparung (24.1., 24.2) für ein Schleifwerkzeug (12) einer CAD/CAM-Bearbeitungsstation (2) ausreicht, um in axialer Richtung (13) zum Erstkontakt einzurasten.

2. Scheibenförmiger Rohling (7) nach Anspruch 1, **dadurch gekennzeichnet, dass** er weiterhin ein Durchgangsloch (20) durch den scheibenförmigen Rohling (7) aufweist.

3. Scheibenförmiger Rohling (7) nach Anspruch 1 oder 2, umfassend eine Markierung (29) zur rotatorischen Positionierung des scheibenförmigen Rohlings (7).

4. Verfahren zur Herstellung von keramischen Zahnprothesenteilen mittels einer CAD/CAM-Bearbeitungsstation (2), das die folgenden Schritte umfasst:
- Bereitstellen eines scheibenförmigen Rohlings (7) gemäß einem der weitergehenden Ansprüche;
- Anbringen des scheibenförmigen Rohlings (7) in einer Montagevorrichtung (6) der CAD/CAM-Bearbeitungsstation, sodass der scheibenförmige Rohling (7) an seinem Umfang umschlossen ist;
- Steuern der CAD/CAM-Bearbeitungsstation (2) zum Herstellen eines Erstkontakts zwischen dem scheibenförmigen Rohling (7) und dem Schleifwerkzeug (12) derart, dass das Schleifwerkzeug (12) in eine der Aussparungen (24.1, 24.2) zum Zuführen des Schleifwerkzeugs (12) zum scheibenförmigen Rohling (7) eingeführt wird und zum Erstkontakt durch die Öffnung der Aussparung (24.1, 24.2) an den scheibenförmigen Rohling (7) herangeführt wird, wobei aufgrund der Drehung des Schleifwerkzeugs (12) um seine Längsachse (13) die gesamte Kontaktfläche (21.1) zwischen Schleifwerkzeug und scheibenförmigem Rohling (7) eine Relativbewegung erfährt; und
- Bearbeiten des scheibenförmigen Rohlings (7) mittels des sich drehenden Schleifwerkzeugs (12) ausgehend vom Erstkontakt, um die keramischen Zahnprothesenteile herzustellen.

5. Verfahren nach Anspruch 4, wobei
die Montagevorrichtung (6) mindestens eine Aussparung (24) umfasst, die zum scheibenförmigen Rohling (7) hin offen ist, und wobei in dem Steuerschritt das Schleifwerkzeug (12) in die Aussparung (24) eingeführt wird, um das Schleifwerkzeug (12) dem Rohling zuzuführen, und für den Erstkontakt durch die Öffnung der Aussparung (24) an den scheibenförmigen Rohling (7) herangeführt wird, und/oder
der scheibenförmige Rohling (7) mittels eines Adapters als Gehäuse in der Montagevorrichtung (6) angebracht wird, der mindestens eine Aussparung umfasst, die zu dem scheibenförmigen Rohling (7) hin offen ist, und wobei im Steuerschritt das Schleifwerkzeug (12) in die Aussparung eingebracht wird, um das Schleifwerkzeug (12) dem scheibenförmigen Rohling (7) zuzuführen, und für den Erstkontakt durch die Öffnung der Aussparung an den scheibenförmigen Rohling (7) herangeführt wird, und/oder
der scheibenförmige Rohling (7) über einen Adapter als Gehäuse, das aus einem weicheren Material als der keramische scheibenförmige Rohling (7) besteht, in der Montagevorrichtung (6) angebracht wird und insbesondere aus Holz oder einem Kunststoffmaterial gefertigt ist und im Steuerschritt das Schleifwerkzeug (12) in den Adapter eingeführt wird und das Schleifwerkzeug (12) durch den Adapter an den scheibenförmigen Rohling (7) zum Erstkontakt mit dem scheibenförmigen Rohling (7) herangeführt wird.

6. Verfahren nach Anspruch 4 oder 5, wobei der scheibenförmige Rohling (7) mindestens eine Aussparung (20; 28) aufweist, die sich über die gesamte Dicke des scheibenförmigen Rohlings (7) erstreckt, wobei im Kontrollschritt das Schleifwerkzeug (12) zum Zuführen des Schleifwerkzeugs (12) zum scheibenförmigen Rohling (7) in die Aussparung (20; 28) eingeführt und anschließend zum Erstkontakt an den scheibenförmigen Rohling (7) herangeführt wird.

7. Verfahren nach Anspruch 5 oder 6, wobei im Schritt des Bereitstellens die Aussparung (20; 28; 24.1, 24.2) durch Pressen während der Herstellung des scheibenförmigen Rohlings (7) in den scheibenförmigen Rohling (7) eingeformt wird und/oder wobei die Aussparung (20; 28; 24.1, 24.2) in einem Vorbearbeitungsschritt des scheibenförmigen Rohlings (7) spanabhebend eingearbeitet wird.

8. CAD/CAM-Bearbeitungsstation (2), umfassend: eine Montagevorrichtung (6) zum Montieren eines scheibenförmigen Rohlings (7), ein Schleifwerkzeug (12); und eine Steuereinheit (11), die zur Durchführung des Verfahrens zur Herstellung von keramischen Zahnprothesenteilen nach einem der Ansprüche 4 bis 7 konfiguriert ist.

9. CAD/CAM-Bearbeitungsstation nach Anspruch 8, wo abhängig von Anspruch 5, wobei die Montagevorrichtung mindestens eine Aussparung (24) umfasst, die zu dem scheibenförmigen Rohling hin offen ist, wobei die Steuereinheit derart konfiguriert ist, dass das Schleifwerkzeug für das anfängliche Zuführen in die Aussparung (24) eingeführt und für den Erstkontakt durch die Öffnung der Aussparung an den Rohling herangeführt wird.

10. CAD/CAM-Bearbeitungsstation (2) nach Anspruch 8 oder 9, umfassend einen Speicher (15), in dem eine Position einer Aussparung (20; 24; 28; 24.1, 24.2) gespeichert ist, wobei die Steuereinheit (11) derart konfiguriert ist, dass das Schleifwerkzeug (12) an der Position der Aussparung (20; 24; 28; 24.1, 24.2) in den scheibenförmigen Rohling (7) eintritt.

11. CAD/CAM-Bearbeitungsstation (2) nach einem der Ansprüche 8 bis 10, die einen optischen Sensor (31) zum Erfassen der Position des scheibenförmigen Rohlings (7) und/oder einer Aussparung (20; 24; 28; 24.1, 24.2) relativ zur Montagevorrichtung (6) umfasst, wobei die Steuereinheit (11) derart konfiguriert ist, dass das Schleifwerkzeug (12) an der Position der Aussparung (20; 24; 28; 24.1, 24.2) in den scheibenförmigen Rohling (7) eintritt.

12. CAD/CAM-Bearbeitungsstation (2) nach einem der Ansprüche 8 bis 11, wo abhängig von Anspruch 5, die einen Adapter als Gehäuse zum Anbringen des scheibenförmigen Rohlings (7) in der Montagevorrichtung (6) umfasst, wobei der Adapter aus einem Material hergestellt ist, das weicher als der keramische scheibenförmige Rohling (7) ist, und insbesondere aus Holz oder einem Kunststoffmaterial hergestellt ist, wobei die Steuereinheit (11) derart konfiguriert ist, dass das Schleifwerkzeug (12) zum Herstellen des Kontakts zwischen dem scheibenförmigen Rohling (7) und dem Schleifwerkzeug (12) in den Adapter eintritt.

## Revendications

1. Ébauche discoïde (7) qui est constituée d'une céramique dentaire à résistance finale et appropriée pour être utilisée dans un procédé de production de parties de prothèse dentaire en céramique, **caractérisée en ce que**
l'ébauche discoïde (7) comprend au moins un évidement s'étendant axialement (24.1, 24.2) sur chacun de ses côtés opposés, les évidements (24.1, 24.2) ne s'étendant pas sur toute l'épaisseur, les profondeurs des évidements (24.1, 24.2) correspondant en somme à au moins l'épaisseur de l'ébauche discoïde (7), et chaque évidement (24.1., 24.2) étant suffisant pour un outil de meulage (12) d'une station d'usinage CAD/CAM (2) pour s'engager dans la direction axiale (13) pour établir le premier contact.

2. Ébauche discoïde (7) selon la revendication 1, **caractérisée en ce qu'**elle comprend en outre un trou traversant (20) à travers l'ébauche discoïde (7).

3. Ébauche discoïde (7) selon la revendication 1 ou 2, comprenant un repère (29) pour le positionnement en rotation de l'ébauche discoïde (7).

4. Procédé de production de parties de prothèse dentaire en céramique au moyen d'une station d'usinage CAD/CAM (2), comprenant les étapes suivantes consistant à :
- fournir une ébauche discoïde (7) telle que définie dans l'une quelconque des revendications précédentes ;
- fixer l'ébauche discoïde (7) dans un dispositif de montage (6) de la station d'usinage CAD/CAM de façon que l'ébauche discoïde (7) soit entourée sur la circonférence associée ;
- amener la station d'usinage CAD/CAM (2) à établir un premier contact entre l'ébauche discoïde (7) et l'outil de meulage (12) de façon à introduire l'outil de meulage (12) dans l'un des évidements (24.1, 24.2) pour amener l'outil de meulage (12) jusqu'à l'ébauche discoïde (7) et à le déplacer vers l'ébauche discoïde (7) à travers l'ouverture de l'évidement (24.1, 24.2) pour établir le premier contact, du fait de la rotation de l'outil de meulage (12) autour de l'axe longitudinal (13) associé, toute la surface de contact (21.1) entre l'outil de meulage et l'ébauche discoïde (7) présentant un mouvement relatif ; et
- usiner l'ébauche discoïde (7) au moyen de l'outil de meulage (12) rotatif, en procédant à partir du premier contact, pour produire les parties de prothèse dentaire en céramique.

5. Procédé selon la revendication 4, dans lequel
le dispositif de montage (6) comporte au moins un évidement (24), qui est ouvert en direction de l'ébauche discoïde (7), et à l'étape de commande, l'outil de meulage (12) étant introduit dans l'évidement (24) pour amener l'outil de meulage (12) jusqu'à l'ébauche et étant déplacé jusqu'à l'ébauche discoïde (7) à travers l'ouverture de l'évidement (24) pour établir le premier contact, et/ou
l'ébauche discoïde (7) est fixée dans le dispositif de montage (6) au moyen d'un adaptateur en tant que boîtier, lequel comprend au moins un évidement qui est ouvert vers l'ébauche discoïde (7), et à l'étape de commande, l'outil de meulage (12) étant introduit dans ledit évidement pour amener l'outil de meulage (12) vers l'ébauche discoïde (7) et étant déplacé vers l'ébauche discoïde (7) à travers l'ouverture de l'évidement pour établir le premier contact, et/ou
l'ébauche discoïde (7) est fixée dans le dispositif de montage (6) au moyen d'un adaptateur en tant que boîtier, qui est constitué d'un matériau plus tendre que l'ébauche discoïde (7) en céramique, et en particulier de bois ou de matière plastique, et à l'étape de commande, l'outil de meulage (12) étant introduit dans l'adaptateur, et l'outil de meulage (12) étant déplacé à travers l'adaptateur jusqu'à l'ébauche discoïde (7) pour établir le premier contact avec l'ébauche discoïde (7).

6. Procédé selon la revendication 4 ou 5, dans lequel l'ébauche discoïde (7) comprend au moins un évidement (20 ; 28) qui s'étend sur toute l'épaisseur de l'ébauche discoïde (7), à l'étape de commande, l'outil de meulage (12) étant introduit dans l'évidement (20 ; 28) pour amener l'outil de meulage (12) jusqu'à l'ébauche discoïde (7) et ensuite déplacé vers l'ébauche discoïde (7) pour établir le premier contact.

7. Procédé selon la revendication 5 ou 6, dans lequel, à l'étape de fourniture, l'évidement (20 ; 28 ; 24.1, 24.2) est formé dans l'ébauche discoïde (7) par pressage pendant la fabrication de l'ébauche discoïde (7) et /ou dans lequel l'évidement (20 ; 28 ; 24.1, 24.2) est usiné par une technique de découpe lors d'une étape de prétraitement de l'ébauche discoïde (7).

8. Station d'usinage CAD/CAM (2) comprenant : un dispositif de montage (6) pour monter une ébauche discoïde (7), un outil de meulage (12) ; et une unité de commande (11) qui est conçue pour exécuter le procédé de production de parties de prothèse dentaire en céramique tel que défini dans l'une quelconque des revendications 4 à 7.

9. Station d'usinage CAD/CAM selon la revendication 8, lorsqu'elle dépend de la revendication 5, dans laquelle le dispositif de montage comprend au moins un évidement (24), lequel est ouvert vers l'ébauche discoïde, l'unité de commande étant conçue de façon à introduire l'outil de meulage dans l'évidement (24) pour le premier acheminement et à le déplacer vers l'ébauche par l'ouverture de l'évidement pour établir le premier contact.

10. Station d'usinage CAD/CAM (2) selon la revendication 8 ou 9, comprenant une mémoire (15) dans laquelle une position d'un évidement (20 ; 24 ; 28 ; 24.1, 24.2) est mémorisée, l'unité de commande (11) étant conçue de façon que l'outil de meulage (12) entre dans l'ébauche discoïde (7) au niveau de la position de l'évidement (20 ; 24 ; 28 ; 24.1, 24.2).

11. Station d'usinage CAD/CAM (2) selon l'une quelconque des revendications 8 à 10, comprenant un capteur optique (31) permettant de détecter la position de l'ébauche discoïde (7) et/ou d'un évidement (20 ; 24 ; 28 ; 24.1, 24.2) par rapport au dispositif de montage (6), l'unité de commande (11) étant conçue de façon que l'outil de meulage (12) entre dans l'ébauche discoïde (7) au niveau de la position de l'évidement (20 ; 24 ; 28 ; 24.1, 24.2).

12. Station d'usinage CAD/CAM (2) selon l'une quelconque des revendications 8 à 11, lorsqu'elle dépend de la revendication 5, comprenant un adaptateur en tant que boîtier pour fixer l'ébauche discoïde (7) dans le dispositif de montage (6), l'adaptateur étant constitué d'une matière plus tendre que l'ébauche discoïde (7) en céramique, et en particulier de bois ou de matière plastique, l'unité de commande (11) étant conçue de façon que l'outil de meulage (12) entre dans l'adaptateur pour établir le contact entre l'ébauche discoïde (7) et l'outil de meulage (12).
